# EUROPÄISCHE PATENTSCHRIFT

(11) **EP 1 726 061 B1**
(45) Veröffentlichungstag und Bekanntmachung des Hinweises auf die Patenterteilung: **16.04.2008**
(21) Anmeldenummer: 05715835.4
(22) Anmeldetag: 08.03.2005
(51) Int. Cl.: H01M 10/40

(54) **LEITSALZE FUR GALVANISCHE ZELLEN, DEREN HERSTELLUNG UND VERWENDUNG**
CONDUCTING SALTS FOR GALVANIC CELLS, THE PRODUCTION THEREOF AND THEIR USE
SELS CONDUCTEURS POUR CELLULES GALVANIQUES, LEUR PRODUCTION ET LEUR UTILISATION

(30) Priorität: 08.03.2004 DE 102004011522
(43) Veröffentlichungstag der Anmeldung: 29.11.2006
(73) Patentinhaber: Chemetall GmbH, 60487 Frankfurt (DE)
(72) Erfinder: PANITZ, Jan-Christoph, 60487 Frankfurt (DE); PÖTSCHKE, Andreas, 63791 Karlstein (DE); DIETZ, Rainer, 63329 Egesbach (DE); WIETELMANN, Ulrich, 61381 Friedrichsdorf (DE)
(74) Vertreter: Uppena, Franz
(86) Internationale Anmeldenummer: PCT/EP2005/002439
(87) Internationale Veröffentlichungsnummer: WO 2005/086274

(56) Entgegenhaltungen:
- DE-C1- 19 829 030

## Beschreibung

Die Erfindung betrifft Lithium-Boratkomplexsalze, deren Herstellung und deren Verwendung als Elektrolyte in galvanischen Zellen, insbesondere als Leitsalze in Lithiumionenbatterien.

Mobile elektronische Geräte benötigen zur unabhängigen Stromversorgung immer leistungsfähigere, wiederaufladbare Batterien. Neben Nickel/Cadmium- und Nickel/Metallhydrid-Akkumulatoren sind dafür wiederaufladbare Lithiumbatterien geeignet, die im Vergleich zu den Nickelbatterien eine wesentlich höhere Energiedichte aufweisen. Die marktüblichen Systeme weisen eine Klemmenspannung von ca. 3 V auf; dieses Potenzial hat zur Folge, dass wasserbasierte Elektrolytsysteme in Lithiumbatterien nicht verwendbar sind. Statt dessen kommen in Flüssigsystemen nichtwässrige, zumeist organische Elektrolyte (das sind Lösungen eines Lithiumsalzes in organischen Lösungsmitteln, wie Carbonate, Ether oder Ester) zum Einsatz.

Im derzeitig dominierenden Batteriedesign - Lithiumionenbatterien mit Flüssigelektrolyten - wird als Leitsalz praktisch ausschließlich Lithiumhexafluorophosphat (LiPF₆) verwendet. Dieses Salz besitzt die notwendigen Voraussetzungen für einen Einsatz in Hochenergiezellen, d. h. es ist in aprotischen Lösungsmitteln gut löslich, es führt zu Elektrolyten mit hohen Leitfähigkeiten und es weist ein hohes Maß an elektrochemischer Stabilität auf. Oxidative Zersetzung tritt erst bei Potentialen > ca. 4,5 V auf. LiPF₆ hat jedoch schwerwiegende Nachteile, die hauptsächlich auf seine mangelnde thermische Stabilität (Zersetzung oberhalb ca. 130 °C) zurückgeführt werden können. Außerdem wird beim Kontakt mit Feuchtigkeit ätzender und giftiger Fluorwasserstoff freigesetzt, der zum einen die Handhabung erschwert und zum anderen Batteriebestandteile, z. B. die Kathode, angreift und schädigt.

Vor diesem Hintergrund gibt es intensive Bemühungen, alternative Leitsalze zu entwickeln. Als solche wurden vor allem Lithiumsalze mit perfluorierten organischen Resten geprüft. Dabei handelt es sich um das Lithiumtrifluormethansulfonat ("Li-Triflat"), Lithiumimide (Lithium-bis(perfluoralkylsulfonyl)-imide) sowie Lithiummethide (Lithium-tris(perfluoralkylsulfonyl)methide). Alle diese Salze erfordern relativ aufwendige Herstellverfahren, sind deshalb relativ teuer und haben andere Nachteile wie Korrosivität gegenüber Aluminium oder schlechte Leitfähigkeit.

Als weitere Verbindungsklasse für die Verwendung als Leitsalz in wiederaufladbaren Lithiumbatterien wurden Lithiumorganoborate untersucht. Wegen deren geringer Oxidationsstabilität und sicherheitstechnischer Bedenken bei der Handhabung von Triorganoboranen scheiden sie jedoch für kommerzielle Systeme aus.

Einen wesentlichen Fortschritt stellen die in EP 698301 für die Verwendung in galvanischen Zellen vorgeschlagenen Lithiumkomplexsalze des Typs ABL₂ (wobei A Lithium oder ein quartäres Ammoniumion, B Bor und L einen zweizähnigen Liganden, der über zwei Sauerstoffatome an das Boratom gebunden ist, bedeutet) dar. Die vorgeschlagenen Salze, deren Liganden wenigstens einen aromatischen Rest enthalten, weisen jedoch nur dann eine ausreichende elektrochemische Stabilität auf, wenn der Aromat mit elektronenziehenden Resten, typischerweise Fluor, substituiert ist oder wenigstens ein Stickstoffatom im Ring aufweist. Solche Chelatverbindungen sind kommerziell nicht verfügbar und nur mit hohen Kosten herzustellen. Die vorgeschlagenen Produkte konnten sich deshalb nicht am Markt durchsetzen.

Ganz ähnliche Borverbindungen werden in EP 907217 als Bestandteile in organischen Elektrolytzellen vorgeschlagen. Als Bor-enthaltendes Leitsalz werden Verbindungen der allgemeinen Formel LiBXX' vorgeschlagen, wobei die Liganden X und X' gleich oder verschieden sein können und jeder Ligand eine elektronenziehende, Sauerstoff enthaltende Gruppe, die zum Boratom bindet, enthält. Die aufgeführten Verbindungen (Lithium-bordisalicylat und ein spezielles Imidsalz) weisen jedoch die bereits oben erwähnten Nachteile auf.

Das in der DE 19829030 erstmals beschriebene Lithium bis(oxalato)borat (LiBOB) ist das erste für die Verwendung als Elektrolyt beschriebene borzentrierte Komplexsalz, das als Chelatkomponente eine Dicarbonsäure (in diesem Fall Oxalsäure) verwendet. Die Verbindung ist einfach herstellbar, ungiftig und elektrochemisch bis etwa 4,5 V stabil, was ihre Verwendung in Lithiumionenbatterien ermöglicht. Nachteilig ist jedoch, dass sie in neuen Batteriesystemen mit Zellspannungen > 3 V kaum eingesetzt werden kann. Für derartige elektrochemische Speicher werden Salze mit Stabilitäten ≥ ca. 5 V benötigt. Weiterhin nachteilig ist, dass Lithium-bis(oxalato)borat keine strukturellen Variationsmöglichkeiten zulässt, ohne das Grundgerüst zu zerstören.

In der EP 1035612 werden Additive der Formel

Li⁺B⁻(OR¹)ₘ(OR²)ₚ

genannt,
- mit m und p: = 0, 1, 2, 3 oder 4, wobei m + p = 4 und
- R¹ und R²: gleich oder verschieden und gegebenenfalls durch eine Einfach- oder Doppelbindung direkt miteinander verbunden sind, jeweils einzeln oder gemeinsam die Bedeutung einer aromatischen oder aliphatischen Carbon- oder Sulfonsäure haben, oder jeweils einzeln oder gemeinsam die Bedeutung eines aromatischen Rings aus der Gruppe Phenyl, Naphthyl, Anthracenyl oder Phenanthrenyl haben, der unsubstituiert oder ein- bis vierfach durch A oder Hal substituiert sein kann, haben, oder jeweils einzeln oder gemeinsam die Bedeutung eines heterocyclischen aromatischen Rings aus der Gruppe Pyridyl, Pyrazyl oder Bipyridyl, der unsubstituiert oder ein- bis dreifach durch A oder Hal substituiert sein kann, haben, oder jeweils einzeln oder gemeinsam die Bedeutung einer aromatischen Hydroxysäure aus der Gruppe aromatischer Hydroxy-Carbonsäuren oder aromatischer Hydroxy-Sulfonsäuren, der unsubstituiert oder ein- bis vierfach durch A oder Hal substituiert sein kann, haben, und
- Hal: = F, Cl oder Br, und
- A: = Alkylrest mit 1 bis 6 C-Atomen, der ein- bis dreifach halogeniert sein kann.

Als besonders bevorzugte Additive sind Lithium-bis[1,2-benzendiolato-(2-)O,O']borat(1-), Lithium-bis[3-fluoro-1,2-benzendiolato(2-)O,O']borat(1-), Lithium-bis[2,3-naphthalindiolato(2-)O,O']borat(1-), Lithium-bis[2,2'-biphenyldiolato(2-)O,O']borat(1-), Lithium-bis[salicylato(2-)O,O']borat(1-), Lithium-bis[2-olato-benzensulfonato(2-)O,O']borat(1-), Lithium-bis[5-fluoro-2-olato-benzensulfonato(2-)O,O']borat, Lithiumphenolat und Lithium-2,2-biphenolat zu nennen. Dies sind alles *symmetrische* Lithiumchelatoborate vom Typ Li[BL₂].

Als eine elektrochemisch besonders stabile einfache Lithium-(chelato)boratverbindung wurde von C. Angell das Lithium-bis(malonato)borat beschrieben, das ein elektrochemisches Fenster bis 5 V aufweisen soll. Die betrachtete Verbindung hat zum Nachteil, dass sie in den üblichen Batterielösungsmitteln praktisch unlöslich ist (z. B. nur 0,08 molar in Propylencarbonat), so dass es lediglich in DMSO und ähnlichen für Batterien prohibitiven Lösungsmitteln gelöst und charakterisiert werden kann (Wu Xu und C. Austen Angell, Electrochem. Solid-State Lett. 4, E1 - E4, 2001).

In DE 10108592 werden gemischte Borchelatkomplexe der allgemeinen Formel 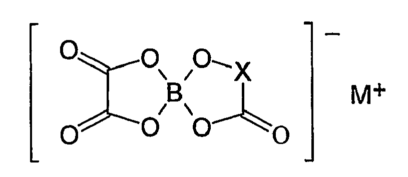 beschrieben, mit
entweder X = -C(R¹R²)- oder -C(R¹R²)-C(=O)- , wobei
- R¹, R²: = unabhängig voneinander H, Alkyl (mit 1 bis 5 C-Atomen), Aryl, Silyl oder ein Polymer sind, und einer der Alkylreste R¹ oder R² mit einem weiteren Chelatoboratrest verbunden sein kann,
- oder X: = 1,2-Aryl, mit bis zu 2 Substituenten S in den Positionen 3 bis 6 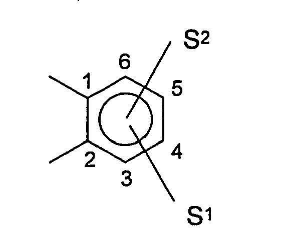
wobei S¹, S² = unabhängig voneinander Alkyl (mit 1 bis 5 C-Atomen), Fluor oder Polymer sind,
- sowie M⁺: = Li⁺, Na⁺, K⁺, Rb⁺, Cs⁺ oder [(R³R⁴R⁵R⁶)N]⁺ oder H⁺ ist, mit R³,R⁴,R⁵,R⁶ = unabhängig voneinander H oder Alkyl mit bevorzugt 1 bis 4 C-Atomen.

Nachteilig an diesen Verbindungen ist deren häufig unbefriedigende Löslichkeit in organischen Lösemitteln wie z.B. Propylencarbonat. Deshalb ist die elektrische Leitfähigkeit solcher Lösungen in der Regel geringer als diejenige etablierter Lithium-Salze (wie z.B. LiPF₆ oder LiBOB).

Aus diesem Grunde sind Flüssigelektrolyte, welche ausschließlich eines der in DE 10108592 offengelegten gemischten Borchelatkomplexsalze enthalten, für leistungsstarke Hochleistungsbatterien nicht einsetzbar.

Auch ist die Synthese, wie sie in DE 10108592 sowie DE 10108608 beschrieben wird, nicht frei von Nachteilen: bei der Herstellung von gemischten Salzen, ausgehend von einem oxidischen Borrohstoff, beispielsweise Borsäure oder Boroxid und zwei unterschiedlichen Komplexliganden L¹ und L² im Molverhältnis 1 : 1 : 1 entsteht nämlich nicht nur das gewünschte gemischte Komplexsalz, sondern es bilden sich auch die homo-Verbindungen [BL¹₂]⁻ und [BL²₂]⁻. In DE 10108608 werden folgende Beispiele genannt:

| Ausgangsstoff | | | | Anteil der Komplexsalze nach ¹¹B-NMR | | | Beispiel aus DE 10108608 |
|---|---|---|---|---|---|---|---|
| L₁ | L₂ | Borverb. | Molverh. | [BL¹L²]⁻ | [BL¹₂]⁻ | [BL²₂]⁻ | |
| Oxalsäure | Malonsäure | Borsäure | 1 : 1 : 1 | 71 % | 11 % | 17 % | 5 |
| Oxalsäure | Milchsäure | Borsäure | 1 : 1 : 1 | 95 % | 2 % | 3 % | 6 |
| Oxalsäure | Salicylsäure | Borsäure | 1 : 1 : 1 | 77 % | 10 % | 13 % | 2* |

| | | | | | | | |
|---|---|---|---|---|---|---|---|
| * DE 10108592 | | | | | | | |

Die unerwünschten *homo*-Verbindungen haben unterschiedliche physikalischchemische Eigenschaften, speziell eine von der gemischten Verbindung verschiedene elektrochemische Stabilität; sie müssen deshalb durch Umkristallisation oder ein ähnliches Reinigungsverfahren abgetrennt werden, was relativ aufwändig ist.

Auch die WO 01/99209 legt die Herstellung gemischter Lithiumboratsalze wie Lithium(malonatooxalato)borat (Beispiele 6 und 7) offen. Es werden zwei Synthesemöglichkeiten beschrieben, die beide als Hauptprodukt das gewünschte Salz ergeben, aber Verunreinigungen durch homo-Komplexverbindungen lassen sich nicht vermeiden (Beispiel 6: 4,5 % Lithium bis(oxalato)borat).

In der EP 1095942 werden Komplexsalze der Formel

Li⁺B⁻(OR¹)ₘ(OR²)ₚ,

beschrieben (zur Bedeutung von R¹, R², m und p siehe oben bei EP 1035612). Sie dienen als Leitsalze in Elektrolyten für elektrochemische Zellen. Ebenso können diese in Anteilen zwischen 1 und 99 % in Kombination mit anderen Leitsalzen verwendet werden. Geeignet sind Leitsalze aus der Gruppe LiPF₆, LiBF₄, LiClO₄, LiAsF₆, LiCF₃SO₃, LiN(CF₃SO₂)₂ oder LiC(CF₃SO₂)₃ und deren Mischungen. Dies sind alles fluorierte Leitsalze.

Aufgabe der vorliegenden Erfindung ist es, die Nachteile des Standes der Technik zu überwinden und insbesondere fluorfreie, einfach und preiswert herstellbare Leitsalze für Lithiumionenbatterien zu finden und deren Synthese aufzuzeigen. Weiterhin sollen die Leitsalze an die material- und anwendungstechnischen Eigenschaften angepasst werden können und eine Formier- und Überladeschutzfunktion aufweisen.

Die Aufgabe wird dadurch gelöst, dass Salzgemische, enthaltend Lithium bis(oxalato)borat ("LiBOB") sowie gemischte Lithiumboratsalze vom Typ 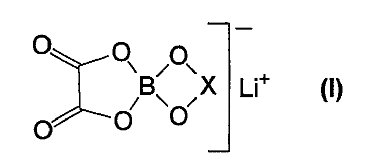 als Leitsalz eingesetzt werden, wobei der Anteil der Verbindung (I) im Salzgemisch 0,01 bis 20 mol-% beträgt. X in Formel (I) ist eine mit zwei Sauerstoffatomen zum Bor verbundene Brücke, die ausgewählt ist aus 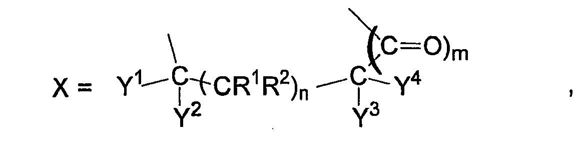 wobei
- Y¹ und Y² zusammen = O bedeuten, m = 1, n = 0 und Y³ und Y⁴ unabhängig voneinander H oder ein Alkylrest mit 1 bis 5 C-Atomen sind, oder
- Y¹, Y², Y³, Y⁴ jeweils unabhängig voneinander OR (mit R = Alkylrest mit 1 bis 5 C-Atomen), oder H oder ein Alkylrest mit 1 bis 5 C-Atomen sind, und wobei m = 0 oder 1, n = 0 oder 1 sind, oder
- Y² und Y³ Glieder eines 5-oder 6-gliedrigen aromatischen oder heteroaromatischen Ringes (mit N, O oder S als Heteroelement) sind, der gegebenenfalls mit Alkyl, Alkoxy, Carboxy oder Nitril substituiert sein kann, wobei Y¹ und Y⁴ entfallen und n = 0, m = 0 oder 1 sind.

Diese neuen, fluorfreien Stoffgemische können beispielsweise analog einem in der DE 10108592 beschriebenen Herstellverfahren hergestellt werden. Dabei muss von der 1 : 1 : 1 : 1 (Borverbindung (z.B. Borsäure) / Oxalsäure / Chelatbildner L² / Lithiumverbindung)-Stöchiometrie in der Weise abgewichen wird, dass vom Chelatbildner L² höchsten 20 mol-%, bezogen auf Oxalsäure, eingesetzt werden. Das Molverhältnis der eingesetzten Stoffe (Borverbindung / Gemisch aus Oxalsäure und Chelatbildner L² / Lithiumverbindung) lautet 1 : 2 : 1, wobei das Gemisch aus Oxalsäure und Chelatbildner L² maximal 20 mol-% Chelatbildner L² enthält. L² ist dabei z.B. eine Dicarbonsäure (nicht Oxalsäure), Hydroxycarbonsäure oder Salicylsäure (welche auch maximal zweifach substituiert sein kann). Weitere Möglichkeiten für den Chelatbildner L² sind weiter unten bei der Beschreibung des Verbindungsteils X aufgeführt.

Die Umsetzung erfolgt bevorzugt in der Weise, dass die Rohstoffkomponenten in einem zur azeotropen Wasserentfernung geeigneten Medium (z. B. Toluol, Xylol, Methylcyclohexan, perfluorierte Kohlenwasserstoffe mit mehr als 6 C-Atomen) suspendiert werden und das Wasser in bekannter Weise azeotrop entfernt wird.

Es ist auch möglich, die Synthese in wässriger Lösung vorzunehmen. Dabei werden die Komponenten in beliebiger Reihenfolge in Wasser eingetragen und unter Rühren, vorzugsweise bei vermindertem Druck, eingedampft. Nach Entfernung der Hauptmenge Wasser bildet sich ein festes Reaktionsprodukt, das je nach spezifischen Produkteigenschaften bei Temperaturen zwischen 100 und 180 °C und vermindertem Druck (z. B. 10 mbar) endgetrocknet wird. Außer Wasser eignen sich auch Alkohole und andere polare organische Lösungsmittel als Reaktionsmedien.

Schließlich kann die Produktherstellung auch ohne Zugabe irgendeines Lösungsmittels erfolgen, d. h. die handelsüblichen Rohstoffe werden gemischt und dann durch Wärmezufuhr erhitzt und unter vorzugsweise reduziertem Druck entwässert.

Bei Durchführung des Verfahrens bildet sich ein Gemisch, welches mindestens 80 mol-% LiBOB neben höchstens 20 mol-% des gemischten Lithiumboratsalzes (I) enthält. Überraschenderweise sind in derartigen Synthesemischungen keine nachweisbaren Mengen von der homo-Komplexverbindung 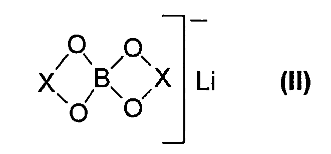 vorhanden. Das erhaltene Leitsalzgemisch hat gegenüber reinem LiBOB den Vorteil, dass bei Überladung eine Zersetzungsreaktion an der Kathode einsetzt, die den Anstieg der Zellspannung verlangsamt. Dadurch können gefährliche Folgereaktionen des Kathodenmaterials mit Bestandteilen des Elektrolyten vermieden bzw. vermindert werden.

Bevorzugte Beispiele für den Verbindungsteil X sind formal um zwei OH-Gruppen verminderte 1,3-Dicarbonsäuren, wie Malonsäure und Alkylmalonsäuren (Malonsäure, substituiert mit einer Alkylgruppe mit bevorzugt 1 bis 5 C-Atomen). (Die zum Bor bindenden O-Atome sind bereits in Formel (I) enthalten, die 1,3 Dicarbonsäuren entsprechen L².)

Weitere bevorzugte Beispiele für den Verbindungsteil X sind formal um zwei OH-Gruppen verminderte 1,2- oder 1,3-Hydroxycarbonsäuren, wie Glycolsäure oder Milchsäure. (Die 1,2- oder 1,3-Hydroxycarbonsäuren entsprechen L².) Der Verbindungsteil X kann auch bevorzugt gebildet werden von gesättigten C₂- oder C₃-Ketten, was sich formal aus um zwei OH-Gruppen verminderten 1,2- oder 1,3-Diolen ableiten lässt. (Die 1,2- oder 1,3-Diole entsprechen L².)

Weitere bevorzugte Beispiele für den Verbindungsteil X sind formal um zwei OH-Gruppen verminderte 1,2-Bisphenole (wie Brenzcatechin) oder 1,2-Carboxyphenole (wie Salicylsäure) oder aromatische oder heteroaromatische 1,2-Dicarbonsäuren (wie Phthalsäure oder Pyridin-2,3-diol). Die aufgeführten 1,2-Bisphenole, 1,2-Carboxyphenole oder aromatische 1,2-Dicarbonsäuren entsprechen L²

Der Gegenstand der Erfindung wird anhand der folgenden Beispiele näher erläutert:

### Beispiel 1:

In einem 250 ml-Rundkolben aus Glas wurden 23,95 g Oxalsäure-Dihydrat, 6,81 g Borsäure und 1,38 g Salicylsäure (10 mol %, bezogen auf Borsäure) in 50 ml Wasser suspendiert und unter Rühren mit 4,06 g Lithiumcarbonat versetzt. Nach Abklingen der Gasentwicklung (CO₂ aus Neutralisationsreaktion) wurde die Suspension 1 Stunde bei einer Ölbadtemperatur von 115 °C refluxiert. Dabei bildete sich eine klare, farblose Lösung. Diese Lösung wurde am Rotationsverdampfer bei einer Ölbadtemperatur von 125 °C im Vakuum totaleingedampft.

Der zurückbleibende Feststoff wurde unter Schutzgasatmosphäre (Argon) mit einem Nickelspatel vorzerkleinert und in einem Porzellanmörser fein zerrieben. Das Pulver wurde dann wieder in einen Glasrundkolben gefüllt und am Rotationsverdampfer bei 150 °C und zuletzt 13 mbar endgetrocknet.
Ausbeute : 17,3 g (88 % der Theorie, Verluste durch Verbackungen im Glaskolben)

Analyse: Lithium 3,60 % (soll: 3,54 %)

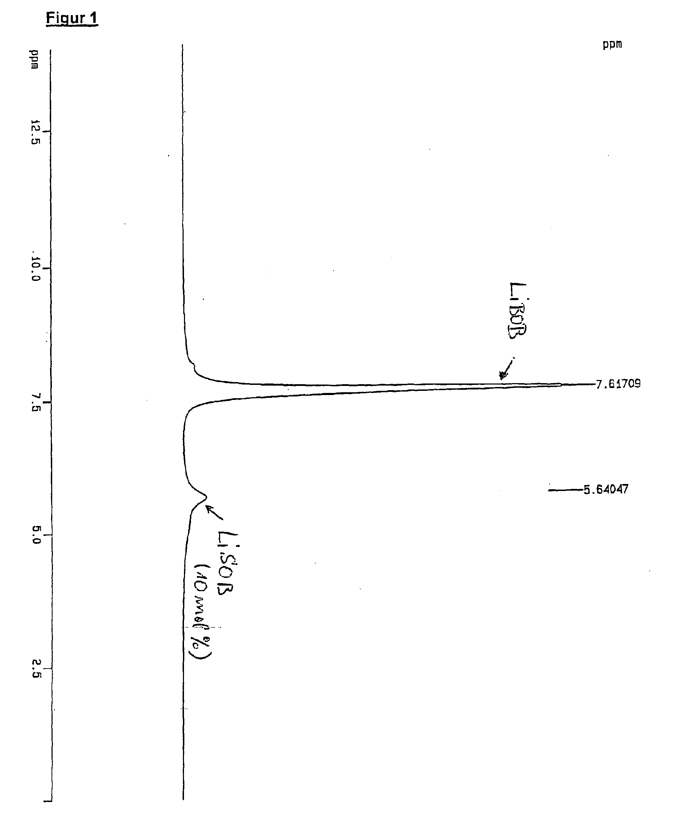

Reinheit: Im ¹¹B NMR-Spektrum (Lösungsmittel THF/C₆D₆) lässt sich die *homo-*Verbindung Lithium-bis(salicylato)borat (Literaturverschiebung 4,0 ppm) nicht nachweisen, erkennbar sind lediglich die Signale der erwarteten Produkte Lithium bis(oxalato)borat (7,6 ppm), abgekürzt LiBOB, und des gemischten Salzes Lithium (salicylato, oxalato)borat (5,6 ppm), abgekürzt LiSOB, vgl. Figur 1.

## Patentansprüche

1. Leitsalz, enthaltend Lithium bis(oxalato)borat (LiBOB) und gemischte Lithiumboratsalze vom Typ 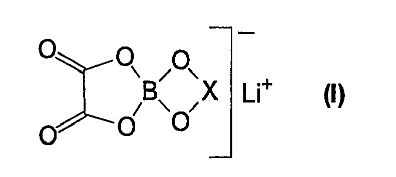 wobei der Anteil der Verbindung (I) im Leitsalz 0,01 bis 20 mol-% beträgt und X in Formel (1) eine mit zwei Sauerstoffatomen zum Bor verbundene Brücke ist, die ausgewählt ist aus 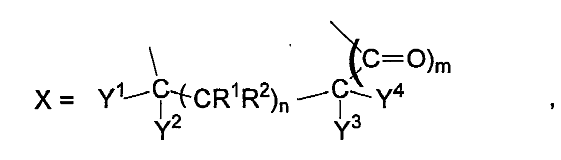 wobei
- Y¹ und Y² zusammen = O bedeuten, m = 1, n = 0 und Y³ und Y⁴ unabhängig voneinander H oder ein Alkylrest mit 1 bis 5 C-Atomen sind, oder
- Y¹, Y², Y³, Y⁴ jeweils unabhängig voneinander OR (mit R = Alkylrest mit 1 bis 5 C-Atomen), oder H oder ein Alkylrest mit 1 bis 5 C-Atomen sind, und wobei m = 0 oder 1, n = 0 oder 1 sind, oder
- Y² und Y³ Glieder eines 5-oder 6-gliedrigen aromatischen oder heteroaromatischen Ringes (mit N, O oder S als Heteroelement) sind, der gegebenenfalls mit Alkyl, Alkoxy, Carboxy oder Nitril substituiert sein kann, wobei Y¹ und Y⁴ entfallen und n = 0, m = 0 oder 1 sind.

2. Leitsalz nach Anspruch 1, **dadurch gekennzeichnet, dass** der Verbindungsteil X aus formal um zwei OH-Gruppen verminderte 1,3-Dicarbonsäuren gebildet wird.

3. Leitsalz nach Anspruch 2, **dadurch gekennzeichnet, dass** die 1,3-Dicarbonsäure Malonsäure oder eine Alkylmalonsäure ist.

4. Leitsalz nach Anspruch 1, **dadurch gekennzeichnet, dass** der Verbindungsteil X aus formal um zwei OH-Gruppen verminderte 1,2- oder 1,3-Hydroxycarbonsäuren gebildet wird.

5. Leitsalz nach Anspruch 4, **dadurch gekennzeichnet, dass** die 1,2-Hydroxycarbonsäure beziehungsweise 1,3-Hydroxycarbonsäure Glycolsäure oder Milchsäure ist.

6. Leitsalz nach Anspruch 1, **dadurch gekennzeichnet, dass** der Verbindungsteil X gebildet wird von gesättigten C₂- oder C₃-Ketten.

7. Leitsalz nach Anspruch 1, **dadurch gekennzeichnet, dass** der Verbindungsteil X aus formal um zwei OH-Gruppen verminderte 1,2-Bisphenole oder 1,2-Carboxyphenole (wie Salicylsäure) oder aromatische 1,2-Dicarbonsäuren (wie Phthalsäure) oder Pyridin-2,3-diol gebildet wird.

8. Leitsalz nach Anspruch 7, **dadurch gekennzeichnet, dass** das 1,2-Bisphenol Brenzcatechin, das 1,2-Carboxyphenol Salicylsäure und die 1,2-Dicarbonsäure Phthalsäure ist.

9. Verfahren zur Herstellung von Leitsalzen gemäß einem oder mehreren der Ansprüche 1 bis 8, **dadurch gekennzeichnet, dass** eine geeignete Borverbindung, Oxalsäure, ein geeigneter Chelatbildner L² und eine geeignete Lithiumverbindung gemischt werden, wobei das Molverhältnis der eingesetzten Stoffe (Borverbindung / Gemisch aus Oxalsäure und Chelatbildner L² / Lithiumverbindung) 1 : 2 : 1 lautet und das Gemisch aus Oxalsäure und Chelatbildner L² maximal 20 mol-% Chelatbildner L² enthält.

10. Verfahren gemäß Anspruch 9, **dadurch gekennzeichnet, dass** als Borverbindung Borsäure und als Chelatbildner L² eine Dicarbonsäure (nicht Oxalsäure) oder Hydroxycarbonsäure eingesetzt wird.

11. Verfahren gemäß Anspruch 9, **dadurch gekennzeichnet, dass** als Chelatbildner L² 1,3-Dicarbonsäuren, beispielsweise Malonsäure oder eine Alkylmalonsäure, wobei bevorzugt eine Alkylgruppe mit 1 bis 5 C-Atomen eingesetzt wird, 1,2- oder 1,3-Hydroxycarbonsäuren, beispielsweise Glycolsäure oder Milchsäure, 1,2- oder 1,3-Diole, 1,2-Bisphenole, beispielsweise Brenzcatechin, 1,2-Carboxyphenole, beispielsweise Salicylsäure (die auch maximal zweifach substituiert sein kann) oder aromatische oder heteroaromatische 1,2-Dicarbonsäuren, beispielsweise Phthalsäure oder Pyridin-2,3-diol eingesetzt wird.

12. Verfahren gemäß einem der Ansprüche 9 bis 11, **dadurch gekennzeichnet, dass** die Rohstoffkomponenten in einem zur azeotropen Wasserentfernung geeigneten Medium (z. B. Toluol, Xylol, Methylcyclohexan, perfluorierte Kohlenwasserstoffe mit mehr als 6 C-Atomen) suspendiert werden und das Wasser in bekannter Weise azeotrop entfernt wird.

13. Verfahren gemäß einem der Ansprüche 9 bis 11, **dadurch gekennzeichnet, dass** es in wässriger Lösung durchgeführt wird, wobei die Komponenten in beliebiger Reihenfolge in Wasser eingetragen und unter Rühren, vorzugsweise bei vermindertem Druck, eingedampft werden.

14. Verfahren gemäß Anspruch 13, **dadurch gekennzeichnet, dass** anstelle von Wasser Alkohole oder andere polare organische Lösungsmittel als Reaktionsmedien verwendet werden.

15. Verfahren gemäß einem der Ansprüche 9 bis 11, **dadurch gekennzeichnet, dass** die Rohstoffkomponenten ohne Zugabe eines Lösungsmittels gemischt, durch Wärmezufuhr erhitzt und unter vorzugsweise reduziertem Druck entwässert werden.

16. Verwendung der Leitsalze gemäß einem oder mehreren der Ansprüche 1 bis 8 in galvanischen Zellen.

17. Verwendung der Leitsalze gemäß einem oder mehreren der Ansprüche 1 bis 8 in Lithiumionenbatterien.

## Claims

1. A conducting salt containing lithium bis(oxalato)borate (LiBOB) and mixed lithium-borate salts of the type 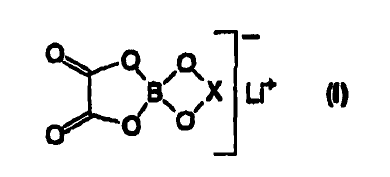 wherein the proportion of compound (I) in the conducting salt amounts to 0.01 mol.% to 20 mol.% and X in formula (I) is a bridge which is linked to the boron by two oxygen atoms and which is selected from 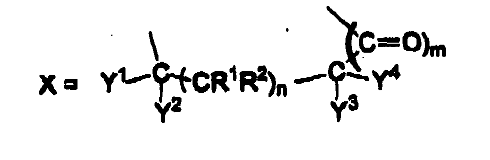 wherein
- Y¹ and Y² together signify O, m = 1, n = 0, and Y³ and Y⁴ are, independently of one another, H or an alkyl residue with 1 to 5 C atoms, or
- Y¹, Y², Y³, Y⁴ are in each case, independently of one another, OR (with R = alkyl residue with 1 to 5 C atoms), or H or an alkyl residue with 1 to 5 C atoms, and where m = 0 or 1, n = 0 or 1, or
- Y² and Y³ are members of a 5-membered or 6-membered aromatic or heteroaromatic ring (with N, O or S as heteroelement), which may be optionally substituted with alkyl, alkoxy, carboxy or nitrile, in which case Y¹ and Y⁴ are not applicable and n = 0, m = 0 or 1.

2. A conducting salt according to Claim 1, **characterised in that** compound part X is formed from 1,3-dicarboxylic acids formally lessened by two OH groups.

3. A conducting salt according to Claim 2, **characterised in that** the 1,3-dicarboxylic acid is malonic acid or an alkylmalonic acid.

4. A conducting salt according to Claim 1, **characterised in that** compound part X is formed from 1,2- or 1,3-hydroxycarboxylic acids formally lessened by two OH groups.

5. A conducting salt according to Claim 4, **characterised in that** the 1,2-hydroxycarboxylic acid or 1,3-hydroxycarboxylic acid is glycolic acid or lactic acid.

6. A conducting salt according to Claim 1, **characterised in that** compound part X is formed by saturated C₂ chains or saturated C₃ chains.

7. A conducting salt according to Claim 1, **characterised in that** compound part X is formed from 1,2-bisphenols or from 1,2-carboxyphenols (such as salicylic acid) or from aromatic 1,2-dicarboxylic acids (such as phthalic acid) or pyridine-2,3-diol, these compounds having been formally lessened by two OH groups.

8. A conducting salt according to Claim 7, **characterised in that** the 1,2-bisphenol is pyrocatechol, the 1,2-carboxyphenol is salicylic acid, and the 1,2-dicarboxylic acid is phthalic acid.

9. A process for producing conducting salts according to one or more of Claims 1 to 8, **characterised in that** a suitable boron compound, oxalic acid, a suitable chelating agent L₂ and a suitable lithium compound are mixed, the molar ratio of the substances employed (boron compound / mixture of oxalic acid and chelating agent L² / lithium compound) being 1 : 2 : 1, and the mixture of oxalic acid and chelating agent L² containing a maximum of 20 mol.% chelating agent L².

10. A process according to Claim 9, **characterised in that** boric acid is employed as boron compound, and a dicarboxylic acid (not oxalic acid) or hydroxycarboxylic acid is employed as chelating agent L².

11. A process according to Claim 9, **characterised in that** 1,3-dicarboxylic acids, for example malonic acid or an alkylmalonic acid, in which case an alkyl group with 1 to 5 C atoms is preferably employed, 1,2- or 1,3-hydroxycarboxylic acids, for example glycolic acid or lactic acid, 1,2- or 1,3-diols, 1,2-bisphenols, for example pyrocatechol, 1,2-carboxyphenols, for example salicylic acid (which may also be maximally disubstituted) or aromatic or heteroaromatic 1,2-dicarboxylic acids, for example phthalic acid or pyridine-2,3-diol, is employed as chelating agent L².

12. A process according to one of Claims 9 to 11, **characterised in that** the raw-material components are suspended in a medium suitable for azeotropic removal of water (e.g. toluene, xylene, methylcyclohexane, perfluorinated hydrocarbons with more than 6 C atoms), and the water is removed azeotropically in known manner.

13. A process according to one of Claims 9 to 11, **characterised in that** it is implemented in aqueous solution, the components being charged into water in arbitrary sequence and being concentrated by evaporation subject to stirring, preferably at reduced pressure.

14. A process according to Claim 13, **characterised in that** alcohols or other polar organic solvents are used instead of water as reaction media.

15. A process according to one of Claims 9 to 11, **characterised in that** the raw-material components are mixed without addition of a solvent, are heated by supply of heat, and are dehydrated under preferably reduced pressure.

16. Use of the conducting salts according to one or more of Claims 1 to 8 in galvanic cells.

17. Use of the conducting salts according to one or more of Claims 1 to 8 in lithium-ion batteries.

## Revendications

1. Sel conducteur, contenant du bis(oxalato)borate de lithium (LiBOB) et un mélange de sels de type borate de lithium, de formule (I) : 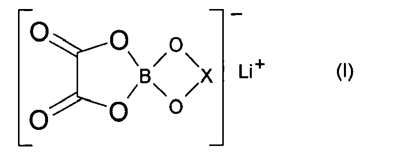 dans lequel sel conducteur les composés de formule (I) se trouvent en une proportion molaire de 0,01 à 20 %, et dans la formule (I), X représente un groupe lié en pont à l'atome de bore par l'intermédiaire de deux atomes d'oxygène, lequel groupe est choisi parmi ceux de formule suivante : 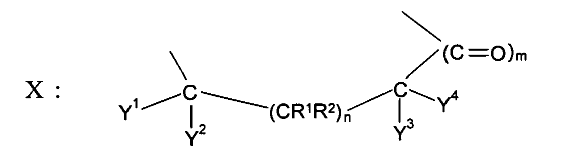 dans laquelle :
- soit Y¹ et Y² représentent ensemble un substituant oxo (=O), l'indice m vaut 1, l'indice n vaut 0, et Y³ et Y⁴ représentent chacun, indépendamment l'un de l'autre, un atome d'hydrogène ou un groupe alkyle comportant 1 à 5 atomes de carbone,
- soit Y¹, Y², Y³ et Y⁴ représentent chacun, indépendamment les uns des autres, un atome d'hydrogène, un groupe alkyle comportant 1 à 5 atomes de carbone ou un groupe symbolisé par OR où R représente un groupe alkyle comportant 1 à 5 atomes de carbone, l'indice m vaut 0 ou 1, et l'indice n vaut 0 ou 1,
- soit Y² et Y³ représentent des chaînons d'un cycle aromatique ou hétéroaromatique à hétéroatome d'azote, d'oxygène ou de soufre, comportant 5 ou 6 chaînons, et portant éventuellement un substituant alkyle, alcoxy, carboxyle ou cyano, Y¹ et Y⁴ ne représentent rien, l'indice n vaut 0, et l'indice m vaut 0 ou 1.

2. Sel conducteur conforme à la revendication 1, **caractérisé en ce que** le fragment X peut être vu, formellement, comme dérivant d'un acide 1,3-dicarboxylique par élimination des deux groupes hydroxyle de celui-ci.

3. Sel conducteur conforme à la revendication 2, **caractérisé en ce que** l'acide 1,3-dicarboxylique est l'acide malonique ou un acide alkyl-malonique.

4. Sel conducteur conforme à la revendication 1, **caractérisé en ce que** le fragment X peut être vu, formellement, comme dérivant d'un acide 2-hydroxy-1-carboxylique ou 3-hydroxy-1-carboxylique par élimination des deux groupes hydroxyle de celui-ci.

5. Sel conducteur conforme à la revendication 4, **caractérisé en ce que** l'acide 2-hydroxy-1-carboxylique ou 3-hydroxy-1-carboxylique est l'acide glycolique ou l'acide lactique.

6. Sel conducteur conforme à la revendication 1, **caractérisé en ce que** le fragment X est constitué d'une chaîne saturée en C₂ ou C₃.

7. Sel conducteur conforme à la revendication 1, **caractérisé en ce que** le fragment X peut être vu, formellement, comme dérivant d'un 1,2-diphénol, d'un 1-carboxy-2-phénol tel que l'acide salicylique, d'un acide aromatique 1,2-dicarboxylique tel que l'acide phtalique, ou du pyridine-2,3-diol, par élimination des deux groupes hydroxyle du composé considéré.

8. Sel conducteur conforme à la revendication 7, **caractérisé en ce que** le 1,2-diphénol est le pyrocatéchol, le 1-carboxy-2-phénol est l'acide salicylique, et l'acide aromatique 1,2-dicarboxylique est l'acide phtalique.

9. Procédé de préparation de sels conducteurs conformes à l'une ou plusieurs des revendications 1 à 8, **caractérisé en ce qu'**on mélange un composé approprié du bore, de l'acide oxalique, un chélatant L² approprié, et un composé approprié du lithium, en des quantités telles que les rapports molaires (composé du bore)/(acide oxalique + chélatant L²)/(composé du lithium) valent 1/2/1 et qu'il y ait au plus 20 % en moles de chélatant L² dans l'ensemble (acide oxalique + chélatant L²).

10. Procédé conforme à la revendication 9, **caractérisé en ce qu'**on emploie de l'acide borique en tant que composé du bore, et en tant que chélatant L², un acide dicarboxylique, excepté de l'acide oxalique, ou un acide hydroxycarboxylique.

11. Procédé conforme à la revendication 9, **caractérisé en ce qu'**on emploie, en tant que chélatant L², un acide 1,3-dicarboxylique, par exemple de l'acide malonique ou un acide alkyl-malonique dont le groupe alkyle comporte de préférence 1 à 5 atomes de carbone, un acide 2-hydroxy-1-carboxylique ou 3-hydroxy-1-carboxylique, par exemple de l'acide glycolique ou de l'acide lactique, un 1,2-diol, un 1,3-diol, un 1,2-diphénol, par exemple du pyrocatéchol, un 1-carboxy-2-phénol, par exemple de l'acide salicylique, éventuellement porteur d'au plus deux substituants, un acide 1,2-dicarboxylique aromatique ou hétéroaromatique, par exemple de l'acide phtalique, ou du pyridine-2,3-diol.

12. Procédé conforme à l'une des revendications 9 à 11, **caractérisé en ce qu'**on met les composants de départ en suspension dans un milieu approprié pour une élimination d'eau par voie azéotropique, par exemple du toluène, du xylène, du méthylcyclohexane ou un hydrocarbure perfluoré dont la molécule comporte plus de 6 atomes de carbone, et l'on en chasse l'eau par voie azéotropique, d'une façon connue.

13. Procédé conforme à l'une des revendications 9 à 11, **caractérisé en ce qu'**on opère en solution aqueuse, en mettant dans de l'eau les composants, dans un ordre quelconque, et en évaporant ensuite la solution, tout en l'agitant, de préférence sous pression réduite.

14. Procédé conforme à la revendication 13, **caractérisé en ce qu'**on emploie comme milieu réactionnel, au lieu d'eau, un alcool ou un autre solvant polaire organique.

15. Procédé conforme à l'une des revendications 9 à 11, **caractérisé en ce qu'**on mélange les composants de départ sans y ajouter aucun solvant, on chauffe le mélange par apport de chaleur, puis on en chasse l'eau, de préférence sous pression réduite.

16. Emploi d'un sel conducteur conforme à l'une des revendications 1 à 8 dans une pile galvanique.

17. Emploi d'un sel conducteur conforme à l'une des revendications 1 à 8 dans un accumulateur à ions lithium.
